# EUROPEAN PATENT SPECIFICATION

(11) **EP 3 850 230 B1**
(45) Date of publication and mention of the grant of the patent: **03.09.2025**
(21) Application number: 19773362.9
(22) Date of filing: 10.09.2019
(51) Int. Cl.: F16B 13/02, F16B 13/12, F16B 12/24

(54) **DOWEL FASTENERS**
DÜBELBEFESTIGER
CHEVILLES DE FIXATION

(30) Priority: 10.09.2018 GB 201814696
(43) Date of publication of application: 21.07.2021
(73) Proprietor: Intelligent Fixings Limited, London EC1A 9ET (GB)
(72) Inventor: THOMSON, Luke, London EC1A 9ET (GB)
(74) Representative: Zermani Biondi Orsi, Umberto
(86) International application number: PCT/EP2019/074146
(87) International publication number: WO 2020/053234

(56) References cited:
- EP-A1- 0 756 092
- EP-A1- 2 868 855
- DE-U1- 8 807 139
- GB-A- 2 077 845
- US-A- 4 396 329

## Description

This invention relates to dowel fasteners, particularly for use in furniture construction, and, more particularly, to fasteners having a dowel portion for insertion into a pre-drilled hole in a furniture component and a head structure, for example in the form of a headed stud, which may engage with another furniture component having a stepped recess into which the stud may be inserted.

While the use of conventional short wooden dowels which are inserted into pre-drilled holes in furniture components is still widespread, there have been many proposals to use instead pre-formed dowels of plastics material where the dowel has projecting fins around a circular shaft and where the external diameter of the fins is slightly larger than the internal diameter of the hole into which the dowel is to be inserted. Examples of such a dowel structure are seen in WO 2017/015402 and WO 2016/015493.

WO 2015/117160 describes a push fastener which can be inserted by hand and which has a series of longitudinally spaced barbs around a shaft, where one end of the shaft is rounded to assist insertion into a pre-drilled hole while the other end of the shaft has a cap with a wedge structure which engages, for example, the edges of a hole formed in a backing sheet of a piece of furniture, so as to hold that backing sheet against other components of the piece of furniture when the fastener is pushed in.

FR-2161175 discloses a moulded fastener structure which in use has a central shaft with lateral fins. The shaft is hollow and, the shaft is pushed into a pre-drilled hole, the fins are deflected upwards towards the open end of the hole and so act as barbs making it difficult to remove the shaft. The specification discloses an embodiment in which the moulded unit may incorporate a threaded short stud which acts as a head on to which a nut may be screwed. Alternatively, the fastener may be used in a fashion similar to a wall plug, with a wood screw or threaded bolt screwed into the central axial bore of the fixing after it has been inserted into a pre-formed hole.

The use of barbs on the side of elongate push-in fasteners to render them relatively easy to push in but more difficult to remove is known in a wide variety of fasteners. Thus, GB2547210A, EP0365161A and US2010/0021267 all disclose fasteners with a set of barbs on each side of a central shank. Such fasteners are not suitable as dowels in connecting components of furniture together, in particular since they do not react evenly irrespective of the direction of force exerted on them in a direction perpendicular to the longitudinal extent of the shank.

Other plastics drive fasteners are disclosed in GB2077845A and GB1451009A. the fasteners described in these specifications are not suitable for use in furniture construction because of the difference in behaviour depending upon the angle at which they are stressed, arising from the need to restrict the angled barbs to two opposite sides of the shank in order to enable simple two-part moulds to be used.

US2011/0117355A discloses a fastener specifically for use in furniture construction but for use in applying ornamental rather than load-bearing components to the underlying structure.

A further prior art dowel is known from document US 4396329.

We have now found that improved performance may be secured by dowel constructions which have a polygonal cross-section central shaft and, extending from each of the faces of the shaft a set of a series of barbs longitudinally spaced along the shaft, wherein the exterior diameter of the contour of the barbs and the diameter of a hole into which the polygonal shaft is a press fit are substantially the same.

Dowel fasteners constructed in this way need to be hammered in or push-fitted using fairly considerable force but, once inserted, are very difficult to remove because the relatively small extent of the projection of the barbs from the central shank means that the barbs cannot easily be flexed if an attempt is made to pull the dowel out.

According generally to the present invention, there is provided a fixing comprising the features of claim 1. Preferably the shaft is of square cross-section, though other polygonal cross-sections may be envisaged, for example triangular, pentagonal or hexagonal.

The external diameter of the barbed portion of the shaft is preferably no more than 3% greater than the diameter of a circle tangent to the apices of the polygonal shaft cross-section.

The faces of the shaft may be flat or slightly convex or concave. A particularly preferred configuration for each face of the shaft is a flat strip adjacent each edge of the face and a slightly raised rib between them.

The fixings in accordance with the present invention are designed for use with holes of internal diameter substantially equal to the external size of the shaft so that the shaft is a tight fit in the hole with its edges, the apices of the polygonal shape, in contact with the sides of the hole. The barbs extend from the faces of the shaft with their exterior size being slightly greater than the interior diameter of the hole into which the fixing is to be inserted, so they are compressed or distorted when the fixing is inserted, usually by hammering or with a press bench tool.

The barbs preferably extend substantially across the entire width of the face of the shaft, though it is possible to conceive of fixings where the barbs do not extend to the edges of each face.

The barbs are preferably of a shape where one side is flat and shaped like the geometrical segment of a circle while the other side is frusto-conical or bowed, in either case being essentially convex. Such a construction enables the fasteners to be made by injection moulding using simple two-part moulds because there are no re-entrant portions on the barbs, i.e. when the fastener is made the barbs do not incline generally back towards the head of the fastener.

A fixing in accordance with the invention has a head portion forming a stud. The shape of the head portion is of a cylindrical section of external diameter slightly greater than the diameter of the polygonal section shaft (so that the transition between head and shaft constitutes a shoulder which can come to lie against the surface of the furniture component from which the hole extends and into which the fastener is driven) and having a cap, the underside of which is annular in a plane perpendicular to the elongation of the shaft and the top being conical, domed or frusto-conical as desired. Although such a fixing may be configured so that it sits very firmly once inserted into the pre-drilled hole and resists being pulled therefrom axially, it is sometimes desired to provide even greater resistance to being pulled out, and this may be easily achieved if the fixing in accordance with the present invention has a central axial hole through which a secondary fastener may be passed, for example a pin or a threaded screw which is longer than the fastener itself and the leading end of which may accordingly be engaged with the material of the component into which the hole has been drilled for the reception of the fastener in accordance with the invention. In such fixings, the faces of the shaft are preferably slightly convex or flat with a central rib, in order that the presence of the central axial hole does not overly weaken the strength or integrity of the fixing itself.

Fasteners in accordance with the present invention may be made by injection-moulding from suitable plastics materials, for example glass fibre reinforced Nylon 6, to tight tolerances.

By way of example, a fastener in accordance with the present invention is illustrated in the accompanying drawings in which:

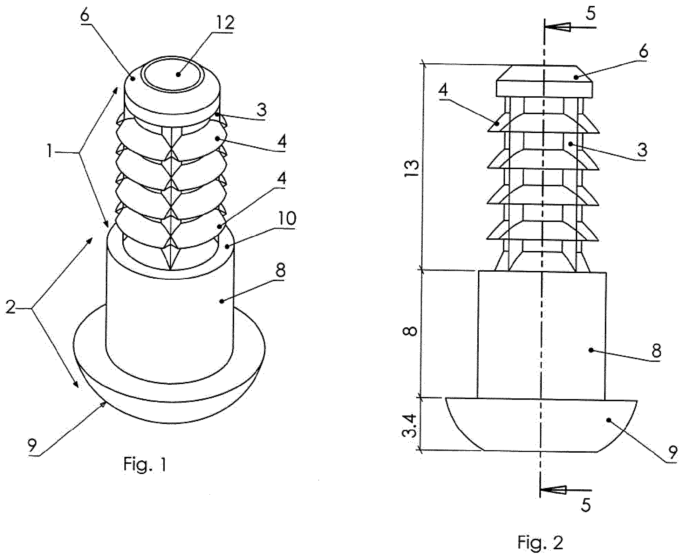

Figure 1 is a perspective view of a fastener in accordance with the present invention;
Figure 2 is a side view of the fastener shown in Figure 1;
Figures 3 and 4 are end views of the fastener, Figure 3 being from the dowel portion end and Figure 4 being of the head;
Figure 5 is a longitudinal section of the fastener along the lines 5-5 in Figure 2; and
Figure 6 is a cross-sectional view along the lines 6-6 in Figure 5.

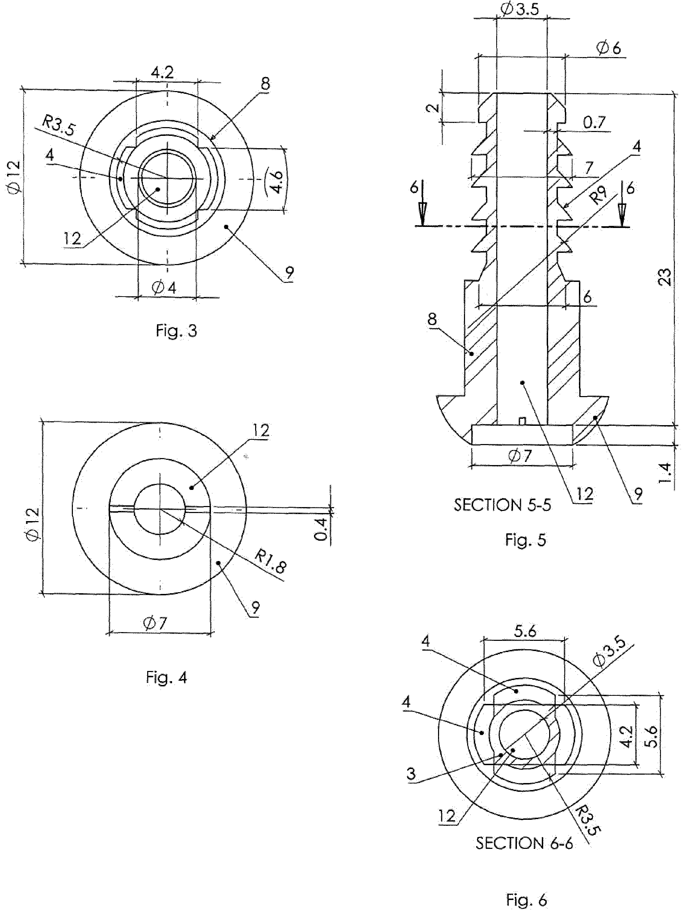

Referring to the drawings, the dowel fastener according to the present invention illustrated in them consists basically of a dowel portion 1 and a head portion 2. The dowel portion 1 consists of a square section shaft 3 having on each of its four faces a set central low profile convex rib and of four moulded barbs 4. As can be seen most clearly in Figure 6, the barbs 4 extend outwards from the square section shaft 3 so that they have an external size greater than the diagonal measurement between two corners of the shaft 3. The end of the shaft 3 has a circular, part frusto-conical cap 6. The frusto-conical shape means that the fastener may be positioned slightly extending into a pre-drilled hole before being inserted into that hole, e.g. using a hammer or mallet.

The head portion 2 is formed of a cylindrical section 8 and an end cap 9. The diameter of section 8 is slightly larger than the overall size of the dowel portion 1 so as to form a shoulder 10 which, when the fastener is inserted into the pre-drilled hole, abuts the surface of the material in which the hole is drilled.

The fastener illustrated has a central bore 12 through which a long woodscrew may be passed if it is desired, once the fastener has been inserted into a furniture component, to anchor it even more firmly against being pulled out from that component. The surface of the central low profile convex ribs is concentric with the axis of the dowel portion, as can be seen most clearly in Figure 6.

The dimensions shown on the drawings are in millimetres, and as can be seen the particular fastener shown is designed to be inserted into a hole of 7 mm internal diameter.

## Claims

1. A fixing for insertion into a cylindrical cavity, the fixing being formed of a slightly resilient plastics material having a head portion (2) and a shaft (1) extending therefrom, the shaft (1) having a generally polygonal cross-section and the faces of the shaft (1) carrying a series of barbs (4) having an arcuate edge, wherein the exterior profile of the barbs (4) is slightly greater than the interior diameter of the cavity, and when inserted into the cylindrical cavity,
the polygonal cross-section shaft (1) is a close fit within the cylindrical cavity,
**characterized in that** the head portion (2) forms a stud having a cylindrical section (8) terminating with an end cap (9), wherein:
- the cylindrical section (8) has an external diameter slightly greater than the diameter of the polygonal cross-section shaft (1) so as to form a shoulder (10) which, when the fastener is inserted into the cylindrical cavity, abuts the surface of the material in which the cylindrical cavity is drilled;
- the end cap (9) has an annular underside with said cylindrical section (8) in a plane perpendicular to the elongation of the shaft (1) and a conical, domed or frusto-conical top.

2. A fixing according to Claim 1 wherein the shaft (1) is of square cross-section.

3. A fixing according to Claim 1 or 2 wherein each face of the shaft (1) comprises a flat strip adjacent each edge of the face and a raised rib between them.

4. A fixing according to any one of Claims 1 to 3 wherein the barbs (4) extend substantially across the entire width of each face of the shaft (1).

5. A fixing according to any one of Claims 1 to 4 wherein the barbs (4) are shaped like a flat geometrical segment of a circle on one side and have a frusto-conical or generally convex shape on the other side of the barb.

6. A fixing according to any one of Claims 1 to 5 and comprising a central axial hole (12) through which a secondary fastener may be passed.

## Patentansprüche

1. Befestigung zum Einsetzen in einen zylindrischen Hohlraum, wobei die Befestigung aus einem leicht elastischen Kunststoff mit einem Kopfabschnitt (2) und einem von diesem aus verlaufenden Schaft (1) gebildet wird, wobei der Schaft (1) einen im Allgemeinen polygonalen Querschnitt aufweist und die Flächen des Schafts (1) eine Reihe von Widerhaken (4) mit einer bogenförmigen Kante tragen, wobei das Außenprofil der Widerhaken (4) geringfügig größer ist als der Innendurchmesser des Hohlraums und der Schaft (1) mit polygonalem Querschnitt, wenn er in den zylindrischen Hohlraum eingesetzt ist, eine enge Passung in dem zylindrischen Hohlraum bildet,
**dadurch gekennzeichnet, dass** der Kopfabschnitt (2) einen Bolzen mit einem zylindrischen Teil (8) bildet, der in einer Endkappe (9) endet, wobei:
- der zylindrische Teil (8) einen Außendurchmesser aufweist, der geringfügig größer ist als der Durchmesser des Schaftes (1) mit polygonalem Querschnitt, um eine Schulter (10) zu bilden, die, wenn der Befestiger in den zylindrischen Hohlraum eingesetzt ist, an der Oberfläche des Materials anliegt, in das der zylindrische Hohlraum gebohrt ist;
- die Endkappe (9) eine ringförmige Unterseite mit dem genannten zylindrischen Teil (8) in einer Ebene senkrecht zum Längsverlauf des Schafts (1) und eine konische, gewölbte oder kegelstumpfförmige Oberseite aufweist.

2. Befestigung nach Anspruch 1, wobei der Schaft (1) einen quadratischen Querschnitt aufweist.

3. Befestigung nach Anspruch 1 oder 2, wobei jede Fläche des Schafts (1) einen flachen Streifen neben jeder Kante der Fläche und eine erhobene Rippe zwischen ihnen aufweist.

4. Befestigung nach einem beliebigen der Ansprüche 1 bis 3, wobei die Widerhaken (4) im Wesentlichen über die gesamte Breite jeder Fläche des Schafts (1) verlaufen.

5. Befestigung nach einem beliebigen der Ansprüche 1 bis 4, wobei die Widerhaken (4) auf einer Seite wie ein flaches geometrisches Segment eines Kreises geformt sind und auf der anderen Seite des Widerhakens eine kegelstumpfförmige oder im Allgemeinen konvexe Form aufweisen.

6. Befestigung nach einem beliebigen der Ansprüche 1 bis 5, die eine zentrale axiale Öffnung (12) umfasst, durch die ein sekundärer Befestiger geführt werden kann.

## Revendications

1. Fixation pour l'insertion dans une cavité cylindrique, la fixation étant formée d'une matière plastique légèrement résiliente ayant une partie de tête (2) et une tige (1) s'étendant à partir de celle-ci, la tige (1) ayant une section transversale généralement polygonale et les faces de la tige (1) portant une série d'arêtes (4) ayant un bord arqué, dans laquelle le profil extérieur des arêtes (4) est légèrement supérieur au diamètre intérieur de la cavité, et lorsqu'elle est insérée dans la cavité cylindrique, la tige (1) à section transversale polygonale est en ajustement serré à l'intérieur de la cavité cylindrique,
**caractérisée en ce que** la partie de tête (2) forme un goujon ayant une section cylindrique (8) se terminant par un capuchon d'extrémité (9), dans laquelle :
- la section cylindrique (8) présente un diamètre extérieur légèrement supérieur au diamètre de la tige (1) à section transversale polygonale de manière à former un épaulement (10) qui, lorsque l'élément de fixation est inséré dans la cavité cylindrique, vient en butée contre la surface du matériau dans lequel la cavité cylindrique est percée;
- le capuchon d'extrémité (9) a une partie inférieure annulaire avec ladite section cylindrique (8) dans un plan perpendiculaire à l'allongement de la tige (1) et un sommet conique, bombé ou tronconique.

2. Fixation selon la revendication 1, dans laquelle la tige (1) est de section carrée.

3. Fixation selon la revendication 1 ou 2, dans laquelle chaque face de la tige (1) comprend une bande plate adjacente à chaque bord de la face et une nervure surélevée entre elles.

4. Fixation selon l'une quelconque des revendications 1 à 3, dans laquelle les arêtes (4) s'étendent sensiblement sur toute la largeur de chaque face de la tige (1).

5. Fixation selon l'une quelconque des revendications 1 à 4, dans laquelle les arêtes (4) ont la forme d'un segment géométrique plat d'un cercle d'un côté et une forme tronconique ou généralement convexe de l'autre côté de l'arête.

6. Fixation selon l'une quelconque des revendications 1 à 5 et comprenant un trou axial central (12) à travers lequel un élément de fixation secondaire peut passer.
